# EUROPEAN PATENT APPLICATION

(11) **EP 2 631 096 A1**
(43) Date of publication of application: **28.08.2013**
(21) Application number: 11834350.8
(22) Date of filing: 18.10.2011
(51) Int. Cl.: B60H 1/00

(54) **AIR CONDITIONING DEVICE FOR VEHICLE**

(30) Priority: 19.10.2010 JP 2010234587
(71) Applicant: Keihin Corporation, Tokyo 163-0539 (JP)
(72) Inventor: CHIBA Shinya, Shioya-gun Tochigi 329-1233 (JP); OGAWA Naoyuki, Shioya-gun Tochigi 329-1233 (JP); Oinuma Toshiyuki, Shioya-gun Tochigi 329-1233 (JP)
(74) Representative: Ilgart, Jean-Christophe
(86) International application number: PCT/JP2011/073929
(87) International publication number: WO 2012/053511

(57) **Abstract**

An air conditioning device for a vehicle includes a resinous frame which includes an opening through which airflow passes, a sliding door which moves along a surface to which the opening of the frame is exposed at an upstream side of the frame and opens and closes the opening, and a draft resistance member which is disposed at a surface of the frame between a sealing surface, which abuts an end of the sliding door, and the opening when the sliding door closes the opening.

## Description

### TECHNICAL FIELD OF THE INVENTION

The present invention relates to an air conditioning device for a vehicle.

Priority is claimed on Japanese Patent Application No. 2010-234587, filed October 19, 2010, the content of which are incorporated herein by reference.

### BACKGROUND ART

An air conditioning device for a vehicle supplies conditioned air of which the temperature or the like of a cabin is adjusted. In the air conditioning device for a vehicle, an adjustment of the air temperature or the like is performed by a heater core or an evaporator which is disposed in the middle of a channel of airflow inside a case.

Generally, in the air conditioning device for a vehicle, a plurality of openings for allowing the airflow pass through a frame which is integrated with the case is provided. For example, in the frame, an opening for heating which supplies the air cooled by the evaporator to the heater core, and an opening for cold wind which does not supply the air to the heater core and bypasses the heat core are provided. Moreover, in the air conditioning device for a vehicle, the temperature of the conditioned air is adjusted by adjusting a ratio of the air which is supplied to the opening for heating and the opening for cold wind.

The air conditioning device of a vehicle includes openings where the airflow, which is the flow of the above-described air, passes. Furthermore, in the air conditioning device for a vehicle, in order to adjust a supply ratio of the conditioned air and temperature of the conditioned air with respect to a plurality of places for supplying the conditioned air installed inside a cabin, an aperture ratio of each opening can be adjusted. Specifically, the air conditioning device for a vehicle includes a sliding door, and the aperture ratio of the opening is adjusted by moving the sliding door.

Moreover, the sliding door disclosed in Patent Document 1 is thinly formed, and thus, a main body of the sliding door is configured to be easily pressed to an inner wall surface of the frame. Thereby, sealing is improved when the opening is closed.

### PRIOR ART DOCUMENTS

### Patent Documents

Patent Document 1: Japanese Unexamined Patent Application, First Publication No. 2009-184495

### SUMMARY OF THE INVENTION

### Problems to be Solved by the Invention

Incidentally, when the opening is closed, a sealing surface provided at the frame and the sliding door abut each other, and thus, airflow is prevented from flowing into the opening. In order to prevent the airflow from flowing into the opening, it is necessary to flatten the sealing surface with high accuracy. However, since the frame is typically integrated with the case and is formed of resin, the sealing surface provided at the frame may be deformed slightly due to shrinkage when the frame is manufactured. Particularly, when the frame, which includes openings which communicate with pathways formed inside the case, is integrated with the case, the sealing surface is substantially formed at the inner wall of the case, the frame is thickened for balance or reinforcement of the configuration of the pathway, and thus, the shrinkage easily occurs.

In this way, if the sealing surface is deformed, a minute gap occurs between the sealing surface and the sliding door, and thus, air flows into the opening via the gap. If the air flows between the sealing surface and the sliding door, the sliding door vibrates. More specifically, since separation occurs and turbulence is formed when the airflow passes through the sealing surface, a negative pressure which pulls the sliding door to the sealing surface is formed, and thus, the sliding door is pulled to the sealing surface. If the sliding door is pulled to the sealing surface, the gap is reduced or eliminated, the negative pressure is eliminated, the sliding door is slightly separated from the sealing surface, and the gap is formed again. Due to this repeat, the sliding door vibrates.

Moreover, if the sliding door vibrates, the sliding door repeatedly contacts the sealing surface, and thus, noise occurs.

The present invention is made in consideration of the above-described problems, and an object thereof is to prevent the occurrence of noise due to vibration of the sliding door in the air conditioning device for a vehicle having the sliding door.

### Means for Solving the Problems

The present invention adopts the following aspects as measures for solving the above-described problems.

A first aspect includes: a resinous frame which includes an opening through which airflow passes; a sliding door which moves along a surface to which the opening of the frame is exposed at an upstream side of the frame and opens and closes the opening; and a draft resistance member which is disposed at a surface of the frame between a sealing surface, which abuts an end of the sliding door, and the opening when the sliding door closes the opening.

According to a second aspect, in the first aspect, the draft resistance member is pressed by the sliding door, and thus, deformed while being in close contact with the sliding door, and has restoring properties in that a shape of the draft resistance member is restored when the sliding door is separated.

According to a third aspect, in the first or second aspect, the frame includes a recess, in which the draft resistance member is installed, between the sealing surface and the opening, both ends in a movement direction of the sliding door are curved so that both ends are separated from the frame toward tips of the ends, and the draft resistance member protrudes from the sealing surface.

According to a fourth aspect, in the first or second aspect, the draft resistance member is installed in a position close to an end of the opening rather than a center of the opening in a width direction of the sliding door perpendicular to the movement direction of the sliding door.

According to a fifth aspect, in the first or second aspect, the draft resistance member is formed of a sponge-like porous material.

According to a sixth aspect, in the first or second aspect, the frame includes a partition plate which divides the opening into a first region and a second region in the width direction of the sliding door perpendicular to the movement direction of the sliding door, and the draft resistance member is at least installed on each of a position close to an end of the first region rather than a center of the first region and a position close to an end of the second region rather than a center of the second region in the width direction of the sliding door.

According to a seventh aspect, in the first or second aspect, the draft resistance member is formed of a vibration absorbing member.

According to an eighth aspect, in the first or second aspect, a thickness of the sliding door is more than 0 mm and 1 mm or less.

### Effect of the Invention

In the first aspect of the present invention, the draft resistance member is disposed between the sealing surface and the opening of the frame. Thereby, even though a minute gap is formed between the sliding door and the frame when the sliding door closes the opening, due to the draft resistance member, it is possible to block at least a portion of the airflow which flows into the opening via the gap.

In this way, according to the present invention, the flowing-in of air to the opening at the time of closing, which is a cause of vibration of the sliding door in the related art, can be prevented. Therefore, occurrence of noise due to the vibration of the sliding door can be prevented, and particularly, the present invention is effective when the end in a movement direction of the sliding door does not sufficiently abut the sealing surface of the frame.

In addition, in the first aspect of the present invention, when the sliding door closes the opening and abuts the sealing surface, the sliding door which receives wind pressure of the airflow presses the draft resistance member. Thereby, the draft resistance member and the sliding door come into close contact with each other, the flowing-in of the airflow to the opening can be prevented, the draft resistance member is further deformed, and thus, the movement of the sliding door is not impeded.

Moreover, in the first aspect of the present invention, when the sliding door opens the opening, the sliding door is separated from the draft resistance member, and the draft resistance member is restored to the original shape. Thereby, even when the sliding door repeats the opening and closing of the opening in a large number of times, the flowing-in of air to the opening at the time of closing can be prevented any numbers of times.

### BRIEF DESCRIPTION OF DRAWINGS

FIG. 1 is a longitudinal cross-sectional view showing a schematic configuration of an air conditioning device for a vehicle according to an embodiment of the present invention.
FIG. 2A is an enlarged view of a region A of FIG. 1 in a state where a sliding door abuts a sealing surface.
FIG. 2B is an enlarged view of a region B of FIG. 1 in the state where the sliding door abuts the sealing surface.
FIG. 3 is a front view of a frame and a draft resistance member which are included in the air conditioning device for a vehicle according to the embodiment of the present invention.
FIG. 4 is a graph showing a relationship between a thickness of the sliding door and deflection at a position which is separated by 1 mm from an end of the sliding door.
FIG. 5A is a front view showing modifications of the frame and the draft resistance member which are included in the air conditioning device for a vehicle according to the embodiment of the present invention.
FIG. 5B is a front view showing modifications of the frame and the draft resistance member which are included in the air conditioning device for a vehicle according to the embodiment of the present invention.
FIG. 6A is a front view showing modifications of the frame and the draft resistance member which are included in the air conditioning device for a vehicle according to the embodiment of the present invention.
FIG. 6B is a front view showing modifications of the frame and the draft resistance member which are included in the air conditioning device for a vehicle according to the embodiment of the present invention.

### DESCRIPTION OF EMBODIMENTS

Hereinafter, an embodiment of an air conditioning device for a vehicle according to the present invention will be described referring to drawings. Moreover, in the drawings below, scales of each member are appropriately changed in order to draw each member in a recognizable size.

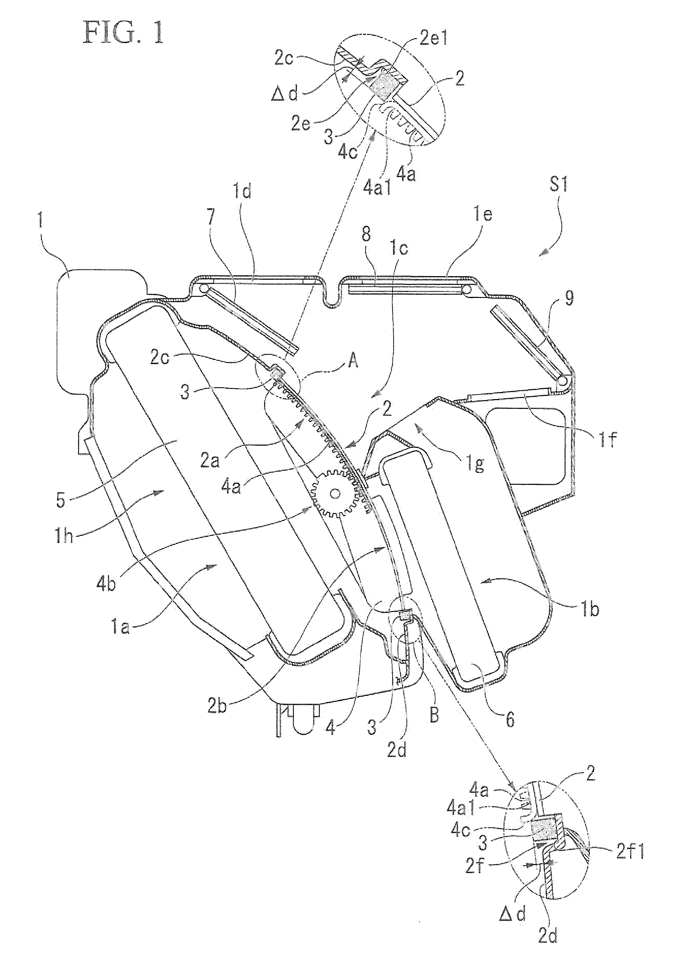

FIG. 1 is a cross-sectional view showing a schematic configuration of the air conditioning device for a vehicle S1 (HVAC: Heating Ventilation Air Conditioning) of the present embodiment. As shown in FIG. 1, the air conditioning device for a vehicle S1 of the present embodiment includes a case 1, a frame 2, draft resistance members 3, an air-mix damper 4, an evaporator 5, a heater core 6, a defroster blowout port mode damper 7, a face blowout port mode damper 8, and a foot blowout port mode damper 9, and takes in airflow sent from a blower (not shown) from an intake port 1h.

The case 1 forms an outline of the air conditioning device for a vehicle S1 of the present embodiment, and includes a cooling channel 1a in which the evaporator 5 is installed, a heating channel 1b in which a heater core 6 is installed, and a mixing unit 1c in which cold wind (airflow) and warm wind (airflow) are mixed and become conditioned air in the inner portion. Moreover, a plurality of blowout ports (a defroster blowout port 1d, a face blowout port 1e, and a foot blowout port 1f) which are exposed to the outside and connected to the mixing unit 1c are provided at the case 1.

The defroster blowout port 1d is an opening for supplying the conditioned air to a window. Moreover, the face blowout port 1e is an opening for supplying the conditioned air to the face of occupants. Furthermore, the foot blowout port 1f is an opening for supplying the conditioned air to feet of occupants.

Moreover, the case 1 includes an opening for warm wind 1g, which supplies the warm wind from the heating channel 1b in which the heater core 6 is installed to the mixing unit 1c, in the inner portion of the case.

The frame 2 includes an opening for cold wind 2a which supplies cold wind from the cooling channel 1a in which the evaporator 5 is installed to the mixing unit 1c, and an opening for heating 2b which supplies cold wind from the cooling channel 1a to the heating channel 1b. The frame 2 is made of resin, is integrated with the case 1, and is provided inside the case 1.

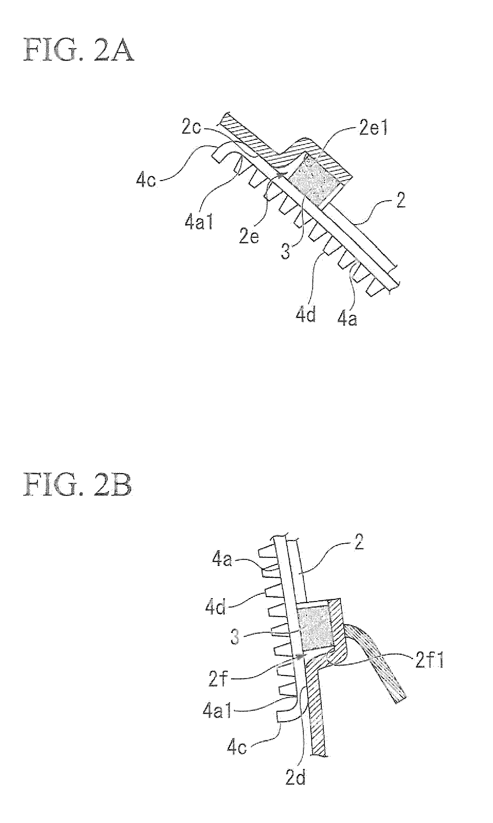

FIG. 2 is a front view when the frame 2 and the draft resistance members 3 are viewed from the evaporator 5 side. As shown in FIG. 2, the frame 2 includes a sealing surface 2c which abuts an end of a sliding door 4a when the sliding door 4a described below included in an air-mix damper 4 closes the opening for cold wind 2a, and a sealing surface 2d which abuts the end of the sliding door 4a when the sliding door 4a closes the opening for heating 2b.

More specifically, as shown in FIG. 1, in the present embodiment, the opening for cold wind 2a is provided at the upper portion, and the opening for heating 2b is provided at the lower portion. Moreover, a portion of the surface of the frame 2, which is positioned above the opening for cold wind 2a, becomes a sealing surface 2c. As shown in an enlarged view of FIG. 2A, the sealing surface 2c abuts an edge (an end in a movement direction of the sliding door 4a) of an upper side of the sliding door 4a when the sliding door 4a closes the opening for cold wind 2a. Furthermore, a portion of the surface of the frame 2, which is positioned under the opening for heating 2b, becomes a sealing surface 2d. As shown in an enlarged view of FIG. 2B, the sealing surface 2d abuts an edge (an end in the movement direction of the sliding door 4a) of a lower side of the sliding door 4a when the sliding door 4a closes the opening for heating 2b.

Moreover, the frame 2 includes guides for guiding the sliding door 4a on side portions. Furthermore, the sliding door 4a moves along the guides, and thus, the opening and closing of the opening for cold wind 2a and the opening for heating 2b are performed.

Moreover, in the air conditioning device for a vehicle S1 of the present embodiment, the frame 2 includes a recess 2e in which the draft resistance member 3 is installed between the sealing surface 2c and the opening for cold wind 2a. Furthermore, the draft resistance member 3 is disposed at a bottom surface 2e1 (a portion of the surface of the frame) of the recess 2e.

Moreover, in the air conditioning device for a vehicle S1 of the present embodiment, the frame 2 includes a recess 2f in which the draft resistance member 3 is installed between the sealing surface 2d and the opening for heating 2b. Furthermore, the draft resistance member 3 is also disposed at a bottom surface 2f1 (a portion of the surface of the frame) of the recess 2f.

The draft resistance member 3 is deformed while being into close contact with the sliding door 4a by being pressed to the sliding door 4a and has restoring properties that the shape is restored when the sliding door 4a is separated. The draft resistance members 3 are formed of a sponge-like porous material (for example, foamed urethane or foamed rubber).

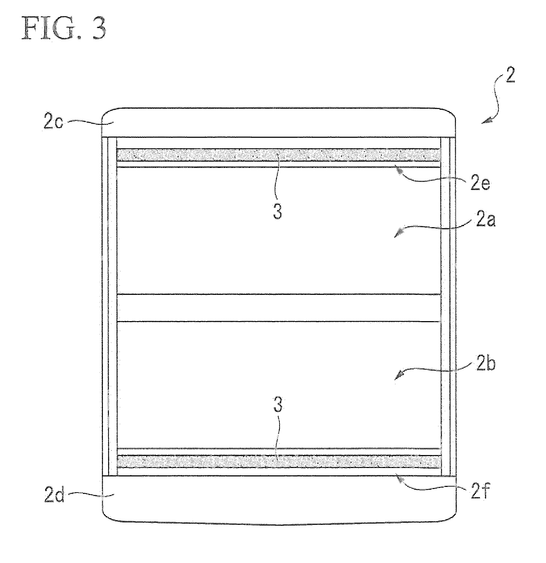

As shown in FIG. 3, the draft resistance member 3 which is disposed above the opening for cold wind 2a has the same length as a width of the opening for cold wind 2a. Moreover, the draft resistance member 3 which is disposed below the opening for heating 2b has the same length as a width of the opening for heating 2b.

Furthermore, as shown in an enlarged view of FIG. 1, the draft resistance members 3 are disposed at the recesses 2e and 2f so that the surface of the sliding door 4a side further protrudes by Δd than the sealing surfaces 2c and 2d. That is, the draft resistance members 3 are higher than the depths of the recesses 2e and 2f and are set to be the heights which protrude from the sealing surfaces 2c and 2d.

The air-mix damper 4 is disposed at the downstream side of the evaporator 5 and adjusts a supply amount to the heating channel 1b of the cold wind generated in the evaporator 5. More specifically, the air-mix damper 4 includes the sliding door 4a which can slide between the opening for cold wind 2a and the opening for heating 2b, and a rack and pinion mechanism 4b for driving the sliding door 4a.

The sliding door 4a is a resinous thin sheet material in which the thickness is more than 0 mm and 1 mm or less. The sliding door 4a is disposed at the upstream side of the frame 2, is guided by guides, and moves along a surface (a surface in which the opening for cold wind 2a and the opening for heating 2b are exposed) of the frame 2. The sliding door 4a moves in this way, and thus, aperture ratios of the opening for cold wind 2a, which is an opening through which the cold wind (airflow) generated in the evaporator 5 passes, and the opening for heating 2b are simultaneously adjusted, and an opening ratio between the opening for cold wind 2a and the opening for heating 2b is adjusted.

Furthermore, both ends 4a1 in the movement direction of the sliding door 4a become curved portions 4c which are curved so as to be separated from the sealing surfaces 2c and 2d. That is, both ends 4a1 of the sliding door 4a are curved so as to be separated from the frame 2 toward their tips.

The rack and pinion mechanism 4b is a mechanism for sliding the sliding door 4a. The rack and pinion mechanism 4b includes a pinion to which a power is transmitted from a motor (not shown) and which is rotated, and a rack 4d which converts the rotary power of the pinion to a linear power and transmits the linear power to the sliding door 4a.

Furthermore, in the air conditioning device for a vehicle S1 of the present embodiment, the rack 4d of the rack and pinion mechanism 4b is integrally formed with the sliding door 4a.

The air conditioning device for a vehicle S1 of the above-described present embodiment includes a configuration in which the sliding door 4a is slid according to the rack and pinion type, the thickness of the sliding door 4a is 1 mm or less, and the rack 4d is integrally formed with the sliding door 4a. The thickness of the sliding door 4a is thinned in this way, and thus, the sliding door 4a has flexibility.

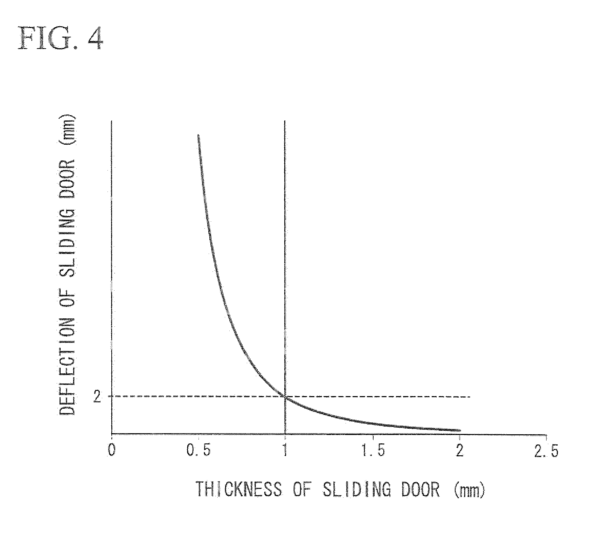

FIG. 4 is a graph showing a relationship between the thickness of the sliding door 4a and deflection at a position separated by 1 mm from the end of the sliding door 4a when pressure of 50 Pa is applied to the sliding door 4a which is formed of a polypropene sheet. As understood from the graph, the deflection gradually increases as the thickness of the sliding door 4a is thinned, and particularly, if the thickness is 1 mm or less, the deflection is increased suddenly.

The larger the deflection is, the more smoothly the sliding door 4a can be deformed. Thereby, the thinner the sliding door 4a is, the more easily the sliding door 4a can be deformed to conform with the sealing surfaces 2c and 2d when the sliding door is pressed to the sealing surfaces due to the airflow. Therefore, the sealing can be secured. Moreover, since the rack 4d is integrally formed with the sliding door 4a, the manufacturing cost can be decreased.

Furthermore, in the air conditioning device for a vehicle S1 of the present embodiment, the opening ratio between the opening for cold wind 2a and the opening for heating 2b is adjusted due to the sliding door 4a, and thus, the supply amount of the cold wind to the heating channel 1b is adjusted. As a result, a mixing ratio between the cold wind and the warm wind in the mixing unit 1c is adjusted, and the temperature of the conditioned air is adjusted.

The evaporator 5 is a portion of a refrigerating cycle which is mounted on a vehicle and is disposed inside the cooling channel 1a. The evaporator 5 cools the air supplied to the cooling channel 1a by a blower (not shown) and generates cold wind.

Referring to FIG. 1 again, the heater core 6 is disposed inside the heating channel 1b and generates warm wind by heating the cold wind which is supplied via the opening for heating 2b.

The defroster blowout port mode damper 7 is a damper which performs the opening and closing of the defroster blowout port 1d and is configured to be rotated in the case 1.

The face blowout port mode damper 8 is a damper which performs the opening and closing of the face blowout port 1e and is configured to be rotated in the case 1.

The foot blowout port mode damper 9 is a damper which performs the opening and closing of the foot blowout port 1f and is configured to be rotated in the case 1.

Moreover, power from a motor (not shown) is supplied to the air-mix damper 4, the defroster blowout port mode damper 7, the face blowout port mode damper 8, and the foot blowout port mode damper 9.

According to the air conditioning device for a vehicle S1 of the present embodiment having the above-described configuration, if both the opening for cold wind 2a and the opening for heating 2b are opened by the air-mix damper 4, the air supplied to the cooling channel 1a is cooled by the evaporator 5 and becomes cold wind, and a portion of the cold wind is supplied to the heating channel 1b.

Furthermore, the warm wind, which is generated by being heated through the heater core 6 in the heating channel 1b, is supplied from the opening for warm wind 1g to the mixing unit 1c, and the cold wind which is not supplied to the heating channel 1b is supplied from the opening for cold wind 2a to the mixing unit 1c.

The cold wind and the warm wind which are supplied to the mixing unit 1c are mixed with each other and become temperature-conditioned air, and the temperature-conditioned air is supplied from any one opening among the defroster blowout port 1d, the face blowout port 1e, and the foot blowout port 1f into the cabin.

Here, in the air conditioning device for a vehicle S1 of the present embodiment, the draft resistance members 3 are disposed between the sealing surface 2c of the frame 2 and the opening for cold wind 2a and between the sealing surface 2d of the frame 2 and the opening for heating 2b.

Thereby, even though a minute gap is formed between the sliding door 4a and the frame 2 when the sliding door 4a closes the opening for cold wind 2a or the opening for heating 2b, due to the draft resistance members 3, it is possible to block at least a portion of the airflow which flows into the opening for cold wind 2a or the opening for heating 2b via the gap.

In this way, according to the air conditioning device for a vehicle S1 of the present embodiment, the flow of the air to the opening (opening for cold wind 2a or opening for heating 2b) at the time of closing which is a cause of the vibration of the sliding door 4a in the related art can be prevented, and it is possible to prevent occurrence of noise due to the vibration of the sliding door 4a.

Furthermore, in the air conditioning device for a vehicle S1 of the present embodiment, when the sliding door 4a closes the opening for cold wind 2a or the opening for heating 2b and abuts the sealing surface 2c or the sealing surface 2d, the sliding door 4a which receives wind pressure of the airflow (cold wind) presses the draft resistance members 3. Thereby, the draft resistance members 3 and the sliding door 4a come into close contact with each other, and it is possible to prevent the airflow (cold wind) from flowing into the opening for cold wind 2a or the opening for heating 2b which is closed from gaps which are formed between the sealing surface 2c or the sealing surface 2d and the sliding door 4a.

Moreover, in the air conditioning device for a vehicle S1 of the present embodiment, if the sliding door 4a is separated from the draft resistance members 3, the draft resistance members 3 are restored to the original shape. Thereby, even when the sliding door 4a repeatedly performs the opening and closing of the opening for cold wind 2a and the opening for heating 2b in a large number of times, since the draft resistance members 3 are deformed to come into close contact with the sliding door 4a, the flowing-in of the cold wind can be prevented securely.

Furthermore, in the air conditioning device for a vehicle S1 of the present embodiment, since the draft resistance members 3 are pressed to the sliding door 4a and deformed, without impeding the movement of the sliding door 4a, it is possible to prevent the flowing of the air into the opening for cold wind 2a or the opening for heating 2b from the gaps formed between the sealing surface 2c or the sealing surface 2d and the sliding door 4a at the draft resistance members 3.

Moreover, in the air conditioning device for a vehicle S1 of the present embodiment, the configuration is adopted in which the frame 2 includes the recess 2e between the sealing surface 2c and the opening for cold wind 2a and the recess 2f between the sealing surface 2d and the opening for heating 2b, and the ventilation members 3 are disposed at the recesses 2e and 2f.

Thereby, the heights of the draft resistance members 3 can be secured without greatly changing the abutting surface of the draft resistance member 3, which abuts the sliding door 4a, from the sealing surface 2c or the sealing surface 2d, and the deformation amount of the draft resistance members 3 in the height direction can be largely secured, and therefore, the draft resistance members 3 can be deformed to come into closer contact with the sliding door 4a without impeding the movement of the sliding door 4a.

Furthermore, in the air conditioning device for a vehicle S1 of the present embodiment, since the draft resistance members 3 protrude from the sealing surfaces 2c and 2d, the sliding door 4a and the draft resistance members 3 can securely abut each other, and it is possible to securely prevent the flowing-in of the cold wind.

Moreover, since both ends 4a1 in the movement direction of the sliding door 4a become the curved portion 4c which is curved to be separated from the sealing surfaces 2c and 2d, the curved portion 4c runs on the abutting surfaces of the draft resistance members 3 even though the draft resistance members 3 protrude, and thus, the movement of the sliding door 4a is not impeded.

Furthermore, in the air conditioning device for a vehicle S1 of the present embodiment, the configuration is adopted in which the draft resistance members 3 are formed of a sponge-like porous material.

In the sponge-like porous material, since a plurality of voids is present, the surface area is decreased and frictional resistance is decreased. Thereby, according to the air conditioning device for a vehicle S1 of the present embodiment, the sliding door 4a can smoothly move even with a small supply of power.

Moreover, in the case where the draft resistance members 3 are a porous material, since the resistance member is deformed so that the volume is decreased when it is pressed, compared to a rubber rigid body which is deformed to be curved or the like, the draft resistance members are strong with respect to twist or torsion, improved durability of the draft resistance members can be maintained for a long time even though the sliding door 4a repeatedly abuts the draft resistance members 3.

Furthermore, the sponge-like porous material has a property which absorbs vibration. According to the draft resistance members 3 which are formed of the vibration absorption member, even though the sliding door 4a is vibrated more or less, the draft resistance members can absorb the vibration. Therefore, it is possible to prevent occurrence of noise.

Moreover, as described above, the thinner the sliding door 4a is, the more improved sealing becomes. Thereby, it is considered that the problems can be solved even though the draft resistance members 3 are not disposed. However, the thinner the sliding door 4a, the easier the sliding door receives the influences of negative pressure generated through the minute gap formed between the sliding door and the sealing surfaces 2c and 2d, and thus, there is a concern that vibration may easily occur. Thereby, when the draft resistance members 3 are not disposed, similar to the air conditioning device for a vehicle in the related art, it is necessary to increase the thickness of the sliding door 4a to some extent, or secure stiffness by assembling other stiffness member to the sliding door. As a result, the sliding door 4a cannot be thinned. Conversely, according to the air conditioning device for a vehicle S1 of the present embodiment, the draft resistance members 3 are disposed, and thus, even though the sliding door 4a is thin, the vibration of the sliding door 4a can be suppressed. Therefore, by the use of the air conditioning device for a vehicle S1 of the present embodiment, the sliding door 4a can be thinned to the maximum, and the vibration due to occurrence of the negative pressure can be also suppressed while securing the improved sealing.

In the above, the proper embodiment of the present invention is described referring to accompanying drawings. However, the present invention is not limited to the embodiment. The shapes, combinations, or the like of each component shown in the above-described embodiment are an example, and various modifications can be performed based on the design request or the like within a range which does not depart from the scope of the present invention.

For example, in the related art, distortion of the sealing surface, which occurs due to shrinkage at the time of molding of the frame integrated with the case, becomes a cause of the gap between the sealing surface and the sliding door, which is a cause of the vibration.

The distortion due to the shrinkage easily occurs in the ends of the sealing surface due to a draft angle of a mold used at the time of molding the frame, or the like.

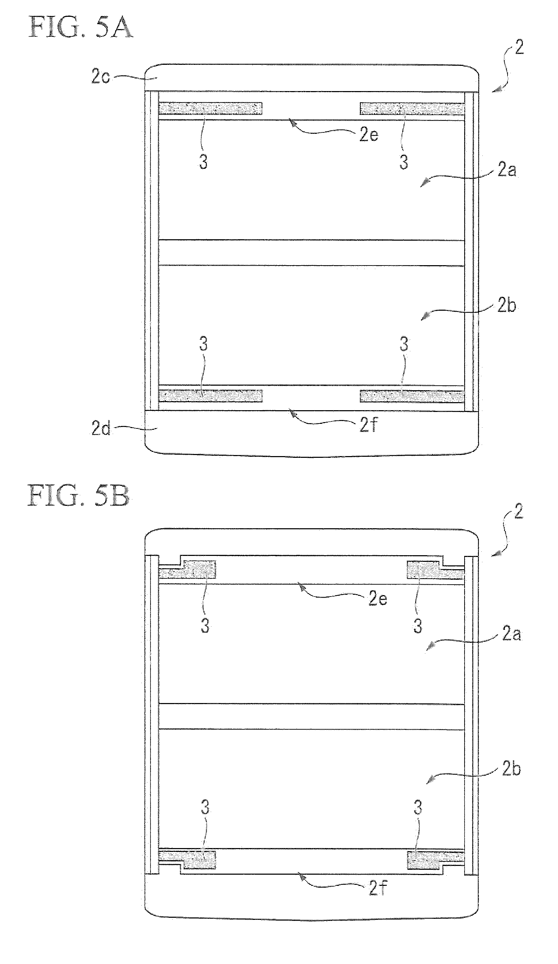

Thereby, as shown in FIG. 5A, the ventilation members 3 may be installed only at positions close to the ends of the sliding door 4a rather than the center of the sliding door 4a in a width direction of the sliding door 4a perpendicular to the movement direction of the sliding door 4a.

Therefore, the flowing-in of the cold wind can be effectively prevented by less material.

Moreover, as shown in FIG. 5B, protrusions are provided at corners of the recesses 2e and 2f, and the draft resistance members 3 may have a shape (an approximately L shape in FIG. 5B) matched to the protrusion.

Thereby, when the draft resistance members 3 are disposed at the recesses 2e and 2f, positioning of the draft resistance members 3 can be easily performed.

Furthermore, in the embodiment, as shown in FIG. 1, the configuration in which the cross-sectional shape of the draft resistance members 3 are rectangular is described.

However, the present invention is not limited thereto, and the draft resistance members 3 may be chamfered so that the draft resistance members 3 do not impede the movement of the sliding door 4a when the sliding door 4a contacts the draft resistance members 3.

Moreover, there is an air conditioning device for a vehicle in which the inner portion of the case 1 including the opening for cooling 2a and the opening for heating 2b is divided into two regions, conditioned air is independently generated in each region, and thus, temperatures of a driver's seat side and a front passenger seat side of the vehicle are independently controlled.

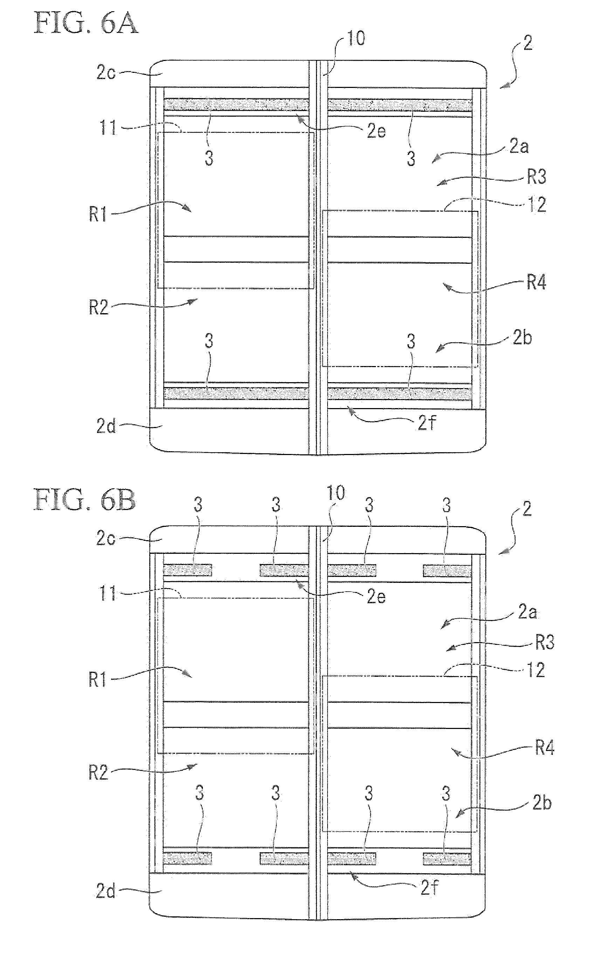

In the air conditioning device for a vehicle, the opening for cold wind 2a and the opening for heating 2b are divided in the left and right by a partition plate 10 which is held by the case 1. The opening for cooling 2a is divided into a first region R1 and a second region R2 in the width direction (the left and right directions in FIGS. 6A and 6B) of the sliding door 4a by the partition plate 10. Moreover, the opening for heating 2b is divided into a first region R3 and a second region R4 in the width direction of the sliding door 4a by the partition plate 10.

Furthermore, in the air conditioning device for a vehicle, two sliding doors 11 and 12 which move independently are provided. Moreover, the opening ratio between the first region R1 of the opening for cooling 2a and the first region R2 of the opening for heating 2b is adjusted by the first sliding door 11, and the opening ratio between the second region R3 of the opening for cooling 2a and the second region R4 of the opening for heating 2b is adjusted by the second sliding door 12.

In addition, the present invention can be also applied to the air conditioning device for a vehicle. That is, as shown in FIG. 6A, ventilation resistance portions 3 may be provided between the first region R1 of the opening for cooling 2a and the sealing surface 2c, between the first region R2 of the opening for heating 2b and the sealing surface 2d, between the second region R3 of the opening for cooling 2a and the sealing surface 2c, and between the second region R4 of the opening for heating 2b and the sealing surface 2d.

Moreover, as shown in FIG. 6B, the draft resistance members 3 may be provided at only each of positions close to the ends of the first regions R1 and R2 rather than the centers of the first regions R1 and R2, and positions close to the ends of the second regions R3 and R4 rather than the centers of the second regions R3 and R4 in the width directions (the left and right directions in FIG. 6B) of the sliding doors 11 and 12. Thereby, since the draft resistance members 3 are selectively provided at only the places in which a minute gap is easily generated, the flowing-in of the cold wind can be effectively prevented by using less material.

Furthermore, when the configuration including the partition plate 10 is adopted, one end of the sliding doors 11 and 12 is guided by a guide provided at the frame 2 including the sealing surface 2c and 2d, and the other end is guided by a guide provided at the partition plate 10 which is a member separate to the frame 2. That is, a portion of the sliding doors 11 and 12 is guided by the guide provided at the partition plate 10 which is a member separate to the frame 2. At this time, a minute gap easily occurs between the sliding doors 11 and 12 and the sealing surfaces 2c and 2d due to dispersion or the like at the time of molding the frame 2 and the partition plate 10. Also in this case, the draft resistance members 3 are provided as described above, and thus, the flowing-in of air from the gap can be prevented, and the occurrence of noise due to vibration of the sliding doors 11 and 12 can be prevented.

Moreover, in the embodiment, the configuration is described in which the opening included in the frame is the opening for cold wind 2a and the opening for heating 2b and the sliding door 4a is incorporated to the air-mix damper 4.

However, the present invention is not limited thereto. For example, the defroster blowout port mode damper 7, the face blowout port mode damper 8, and the foot blowout port mode damper 9 are replaced to sliding dampers, and may use the configuration similar to the present invention.

### Reference Signs List

S1: air conditioning device for vehicle, 1: case, 2: frame, 2a: opening for cold wind (opening), 2b: opening for heating (opening), 2c and 2d: sealing surface, 2e and 2f: recess, 3: draft resistance member 4: air-mix damper, 4a: sliding door, 4b: rack and pinion mechanism, 4c: curved portion, 10: partition plate

## Claims

1. An air conditioning device for a vehicle, comprising:
a resinous frame which comprises an opening through which airflow passes;
a sliding door which moves along a surface to which the opening of the frame is exposed at an upstream side of the frame and opens and closes the opening; and
a draft resistance member which is disposed at a surface of the frame between a sealing surface, which abuts an end of the sliding door, and the opening when the sliding door closes the opening.

2. The air conditioning device for a vehicle according to Claim 1, wherein the draft resistance member is pressed by the sliding door, and thus, deformed while being in close contact with the sliding door, and has restoring properties in that a shape of the draft resistance member is restored when the sliding door is separated.

3. The air conditioning device for a vehicle according to Claim 1 or Claim 2,
wherein the frame comprises a recess, in which the draft resistance member is installed, between the sealing surface and the opening,
both ends in a movement direction of the sliding door are curved so that both ends are separated from the frame toward tips of the ends, and
the draft resistance member protrudes from the sealing surface.

4. The air conditioning device for a vehicle according to Claim 1 or Claim 2,
wherein the draft resistance member is installed in a position close to an end of the opening rather than a center of the opening in a width direction of the sliding door perpendicular to the movement direction of the sliding door.

5. The air conditioning device for a vehicle according to Claim 1 or Claim 2,
wherein the draft resistance member is formed of a sponge-like porous material.

6. The air conditioning device for a vehicle according to Claim 1 or Claim 2,
wherein the frame comprises a partition plate which divides the opening into a first region and a second region in the width direction of the sliding door perpendicular to the movement direction of the sliding door, and
the draft resistance member is installed in at least each of a position close to an end of the first region rather than a center of the first region and a position close to an end of the second region rather than a center of the second region in the width direction of the sliding door.

7. The air conditioning device for a vehicle according to Claim 1 or Claim 2,
wherein the draft resistance member is formed of a vibration absorbing member.

8. The air conditioning device for a vehicle according to Claim 1 or Claim 2,
wherein a thickness of the sliding door is more than 0 mm and 1 mm or less.
